# FASCICULE DE BREVET EUROPEEN

(11) **EP 3 652 702 B1**
(45) Date de publication et mention de la délivrance du brevet: **29.06.2022**
(21) Numéro de dépôt: 18752578.7
(22) Date de dépôt: 10.07.2018
(51) Int. Cl.: G06T 7/11, G06T 7/00, G06T 7/30

(54) **PROCEDE ET DISPOSITIF DE SEGMENTATION D'IMAGES PAR PROPAGATION AUTOMATIQUE DANS UNE (N+1)-IEME DIMENSION D'UNE SEGMENTATION D'IMAGES INITIALISEE EN DIMENSION N**
VERFAHREN UND VORRICHTUNG ZUR SEGMENTIERUNG VON BILDERN DURCH AUTOMATISCHE AUSBREITUNG IN EINE (N+1)-E DIMENSION EINER IN DIMENSION N EINGELEITETEN BILDSEGMENTIERUNG
METHOD AND DEVICE FOR SEGMENTING IMAGES BY AUTOMATIC PROPAGATION INTO AN (N+1)-TH DIMENSION OF AN IMAGE SEGMENTATION INITIALIZED IN DIMENSION N

(30) Priorité: 10.07.2017 FR 1756499
(43) Date de publication de la demande: 20.05.2020
(73) Titulaire: Université d'Aix Marseille, 13284 Marseille Cedex 07 (FR); Centre National de la Recherche Scientifique, 75794 Paris Cedex 16 (FR)
(72) Inventeur: LE TROTER, Arnaud, 13100 Aix en Provence (FR); BEN DAHAN, David, 13006 Marseille (FR); OGIER, Augustin, 35430 Saint-Jouan-des-Guérets (FR)
(74) Mandataire: Bonnet, Michel
(86) Numéro de dépôt international: PCT/FR2018/051732
(87) Numéro de publication internationale: WO 2019/012220

(56) Documents cités:
- Augustin Ogier ET AL: "Segmentation des muscles individuels en IRM basée sur des approches de recalage non-linéaire", Livre de résumés - 3ème congrès de la SFRMBM, 13 mars 2017 (2017-03-13), page 28, XP055418585, Extrait de l'Internet: URL:https://sfrmbm2017.sciencesconf.org/da ta/pages/SFRMBM_bookAbstract.pdf [extrait le 2017-10-24]
- AVANTS ET AL: "Symmetric diffeomorphic image registration with cross-correlation: Evaluating automated labeling of elderly and neurodegenerative brain", MEDICAL IMAGE ANALYSIS, OXFORD UNIVERSITY PRESS, OXOFRD, GB, vol. 12, no. 1, 1 février 2008 (2008-02-01), pages 26-41, XP022459102, ISSN: 1361-8415, DOI: 10.1016/J.MEDIA.2007.06.004
- FENG WEI ET AL: "A dual propagation contours technique for semi-automated assessment of systolic and diastolic cardiac function by CMR", JOURNAL OF CARDIOVASCULAR MAGNETIC RESONANCE, BIOMED CENTRAL LTD, LONDON UK, vol. 11, no. 1, 13 août 2009 (2009-08-13), page 30, XP021059180, ISSN: 1532-429X, DOI: 10.1186/1532-429X-11-30
- FARZAD KHALVATI ET AL: "Inter-slice bidirectional registration-based segmentation of the prostate gland in MR and CT image sequences : Interslice bidirectional registration-based segmentation of the prostate gland", MEDICAL PHYSICS., vol. 40, no. 12, 13 novembre 2013 (2013-11-13), pages 1-11, XP055418662, US ISSN: 0094-2405, DOI: 10.1118/1.4829511

## Description

La présente invention concerne un procédé de propagation automatique dans une (N+1)-ième dimension d'une segmentation d'images initialisée en dimension N, N≥2, pour l'obtention d'une segmentation finale de dimension N+1 dans une série ordonnée de représentations d'images. Elle concerne également un programme d'ordinateur correspondant et un dispositif d'acquisition et de segmentation d'images mettant en œuvre ce procédé.

L'invention s'applique plus particulièrement à un procédé comportant les étapes suivantes :
- acquisition de la série ordonnée, dans ladite (N+1)-ième dimension, de représentations d'images de dimension N,
- segmentation initiale en dimension N d'une région d'intérêt dans les première et dernière représentations d'images de la série ordonnée, pour l'obtention respective de premier et dernier masques de segmentations initiales de la région d'intérêt.

Par « représentation d'image de dimension N », où N≥2, on entend une représentation de dimension N≥2, pouvant éventuellement inclure une dimension temporelle ou une dimension modale d'acquisition (certaines techniques d'imagerie, telles que l'imagerie par résonance magnétique, permettant plusieurs modalités d'acquisition), dans laquelle au moins deux des dimensions sont spatiales de manière à inclure au moins une image bidimensionnelle par représentation.

Par « série ordonnée de représentations d'images », on entend l'extension dans une (N+1)-ième dimension, celle de la série ordonnée, des représentations d'images qui sont chacune de dimension N. Cette (N+1)-ième dimension peut être spatiale (plusieurs acquisitions successives décalées dans une dimension de l'espace), temporelle (plusieurs acquisitions successives décalées dans le temps) ou modale (plusieurs acquisitions successives selon différentes modalités d'imagerie).

Les techniques de segmentations d'images sont très liées aux applications et modes d'acquisitions. Dans certains cas très favorables, des techniques de segmentation automatique ou semi-automatique supervisée connues permettent l'obtention de bons résultats. Par « segmentation semi-automatique supervisée », on entend notamment la possibilité de procéder de façon supervisée, par exemple manuelle, à une segmentation initiale en dimension N dans au moins une représentation d'image d'une série ordonnée de représentations d'images successives, puis de propager automatiquement cette segmentation initiale aux représentations d'images non initialement segmentées à l'aide d'algorithmes de recalages entre représentations d'images. Des techniques de propagation par contours actifs et morphologie mathématique, par recalage non linéaire permettant l'estimation de déformations difféomorphiques, etc., sont bien connues et s'avèrent souvent efficaces.

Mais en imagerie du corps humain ou animal, et notamment en imagerie par résonance magnétique (IRM) des muscles ou nerfs, ces techniques sont inégales et insuffisantes pour quantifier, par exemple en termes de volumétrie, de morphométrie, de fraction d'infiltrat graisseux et autres paramètres spécifiques, les régions neuromusculaires d'intérêt. Il est en effet très difficile de propager longitudinalement (spatialement, temporellement ou même dans une dimension multi-modale) les segmentations de telles régions d'intérêt. Or, si l'extraction et l'analyse de paramètres quantitatifs dans ces régions étaient réalisables, de multiples perspectives et nouveaux enjeux pourraient émerger notamment pour les applications dans le domaine médical mais aussi dans le domaine du sport.

Ainsi par exemple, l'article de Barnouin et al, intitulé « Manual segmentation of individual muscles of the quadriceps femoris using MRI: a reappraisal », publié dans Journal of Magnetic Resonance Imaging, volume 40, pages 239-247, juillet 2014, enseigne dans ce cas précis une méthode rigoureuse pour procéder à une succession de segmentations manuelles dans une série ordonnée de coupes IRM de la cuisse. Bien évidemment, cette méthode permet d'obtenir une segmentation volumétrique optimale. Mais elle est très coûteuse en temps et moyens humains sollicités.

L'article de Ogier et al, intitulé "Segmentation des muscles individuels en IRM basée sur des approches de recalage non-linéaire" publié au 3émé Congrès de la Société Française de Résonance Magnétique en Biologie et Médecine le 13-15 mars 2017 divulgue un algorithme de segmentation permettant une propagation transversale entre deux coupes axiales situées aux extrémités d'un volume d'intérêt et sur lesquelles les masques des muscles individuels ont été dessinés manuellement. Cette méthode consiste à fusionner plusieurs champs de déformations 2D résultants de différentes approches de recalages non-linéaires estimés entre les deux coupes extrêmes. Plus précisément ledit approche divulgue une fusion des champs de déformation décrivant une trajectoire dite « Lagrangienne » avec des champs de déformation décrivant une trajectoire dite « Eulérienne » permettant de suivre de façon optimale les variations anatomiques des muscles dans les images dudit volume d'intérêt.

D'autres méthodes automatiques ou semi-automatiques, impliquant des techniques de marches aléatoires sur graphes, de déformations de modèles ou de recalages sur des images segmentées d'atlas simples ou multiples, ont été testées en imagerie IRM neuromusculaire sans présenter de résultats probants ou précis pour de petites régions d'intérêts. On peut par exemple citer les documents suivants :
- l'article de Baudin et al, intitulé « Automatic skeletal muscle segmentation through random walks and graph-based seed placement », publié dans Proceedings of International Symposium on Biomedical Imaging, pages 1036-1039, mai 2012,
- l'article de Gilles et al, intitulé « Anatomical modelling of the musculoskeletal system from MRI », publié dans Proceedings of International Conférence on Medical Image Computing and Computer-Assisted Intervention, volume 9, pages 289-296, 2006,
- l'article de Prescott et al, intitulé « Anatomically anchored template-based level set segmentation: application to quadriceps muscles in MR images from the osteoarthritis initiative », publié dans Journal of Digital Imaging, volume 24, n°1, pages 28-43, février 2011,
- l'article de Ahmad et al, intitulé « Atlas-registration based image segmentation of MRI human thigh muscles in 3-D space », publié dans Proceedings of SPIE - International Society for Optical Engineering, volume 9037, pages 90371L-1 à 90371L-12, février 2011.

Il peut ainsi être souhaité de prévoir un procédé de propagation automatique d'une segmentation d'images qui permette de s'affranchir d'au moins une partie des problèmes et contraintes précités.

Il est donc proposé un procédé de propagation automatique dans une (N+1)-ième dimension d'une segmentation d'images initialisée en dimension N, N≥2, pour l'obtention d'une segmentation finale de dimension N+1 dans une série ordonnée de représentations d'images tel que défini dans la revendication 1.

Il est bien connu qu'une méthode de propagation de segmentation par recalages successifs est susceptible de fournir de très bons résultats dans les premières itérations tout en dérivant rapidement à cause d'erreurs cumulées issues des recalages, tandis qu'une méthode par interpolation linéaire entre des premier et dernier masques de segmentation, assure une meilleure convergence en dérivant potentiellement fortement entre les deux, et ce d'autant plus si les déformations de la région d'intérêt segmentée s'éloignent d'un modèle de déformation linéaire. Le procédé proposé selon la présente invention permet ainsi d'éviter tous ces écueils en combinant astucieusement une double propagation par recalages successifs ascendants et descendants avec un recalage global, imposant la convergence des propagations aux extrémités de la série ordonnée comme le ferait une interpolation linéaire. Il produit en outre de façon surprenante de meilleurs résultats, par comparaison avec une méthode de segmentation de référence entièrement manuelle, que chacun des meilleurs résultats des recalages qu'il combine lorsqu'ils sont pris indépendamment.

De façon optionnelle, la combinaison des propagations automatiques ascendante et descendante entre elles à l'aide dudit changement de repère est en outre réalisée à l'aide de coefficients de pondération prédéterminés appliqués aux résultats des propagations ascendantes et descendantes, ces coefficients incluant :
- des coefficients décroissant de la première à la dernière représentation d'image pour la propagation automatique ascendante, et
- des coefficients décroissant de la dernière à la première représentation d'image pour la propagation automatique descendante.

De façon optionnelle également :
- le recalage entre les premier et dernier masques de segmentations initiales de la région d'intérêt dont les paramètres sont estimés est un recalage non linéaire, notamment un recalage difféomorphique symétrique, et
- chaque recalage de proche en proche exécuté pour chaque propagation automatique ascendante ou descendante est un recalage non linéaire, notamment un recalage difféomorphique symétrique, calculé entre deux représentations d'images successives de la série ordonnée.

De façon optionnelle également :
- la combinaison des propagations automatiques ascendante et descendante entre elles comporte en outre une combinaison supplémentaire des champs de déplacements spécifiques ascendants et descendants améliorés à l'aide du changement de repère, entre les première et dernière représentations d'images, obtenu par application des paramètres de recalage estimés, pour l'obtention de champs de déplacements ascendants ou descendants optimisés, et
- on obtient des masques de segmentations sur toutes les représentations d'images de la série ordonnée par application de ces champs de déplacements ascendants ou descendants optimisés au premier masque de segmentation initiale de la première image ou au dernier masque de segmentation initiale de la dernière image.

De façon optionnelle également :
- la segmentation initiale en dimension N est réalisée sur plusieurs régions d'intérêts dans les première et dernière représentations d'images de la série ordonnée, pour l'obtention respective de premier et dernier masques de segmentations initiales de chaque région d'intérêt, et
- l'estimation des paramètres de recalage, les propagations automatiques ascendante et descendante ainsi que leur combinaison entre elles sont réalisées pour chaque région d'intérêt initialement segmentée.

De façon optionnelle également :
- une série longue ordonnée, dans ladite (N+1)-ième dimension, de représentations d'images de dimension N est préalablement acquise et subdivisée en une pluralité de séries ordonnées successives,
- la segmentation initiale en dimension N de la région d'intérêt est réalisée dans les première et dernière représentations d'images de chaque série ordonnée, sachant que la première représentation d'image de chaque série ordonnée à partir de la deuxième est aussi la dernière représentation d'image de la série ordonnée qui la précède, et
- l'estimation des paramètres de recalage, les propagations automatiques ascendante et descendante ainsi que leur combinaison entre elles sont réalisées pour chaque série ordonnée de la série longue ordonnée.

De façon optionnelle également, l'acquisition est une acquisition mono- ou multi-modale d'images IRM, chaque représentation d'image incluant N=2, 3 ou 4 dimensions parmi :
- au moins deux de trois dimensions spatiales possibles,
- une dimension temporelle, et
- une dimension modale,
la série ordonnée étant acquise dans la (N+1)-ième dimension sélectionnée parmi :
- l'une des trois dimensions spatiales possibles,
- la dimension temporelle, et
- la dimension modale.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de propagation automatique d'une segmentation d'images selon l'invention, lorsque ledit programme est exécuté sur un ordinateur.

Il est également proposé un dispositif d'acquisition et de segmentation d'images par propagation automatique dans une (N+1)-ième dimension d'une segmentation d'images initialisée en dimension N, N≥2, pour l'obtention d'une segmentation finale de dimension N+1 dans une série ordonnée de représentations d'images tel que défini dans la revendication 9.

L'invention sera mieux comprise à l'aide de la description qui va suivre, donnée uniquement à titre d'exemple et faite en se référant aux dessins annexés dans lesquels :
- la figure 1 représente schématiquement la structure générale d'un dispositif d'acquisition et de segmentation d'images selon un mode de réalisation de l'invention,
- la figure 2 illustre une succession d'instructions d'un programme d'ordinateur en mémoire dans le dispositif de la figure 1,
- la figure 3 illustre les étapes successives d'un procédé de propagation automatique d'une segmentation d'images exécuté par un processeur du dispositif de la figure 1 suivant les instructions du programme de la figure 2,
- la figure 4 illustre un diagramme de résultats expérimentaux, et
- la figure 5 illustre une généralisation du procédé de la figure 3.

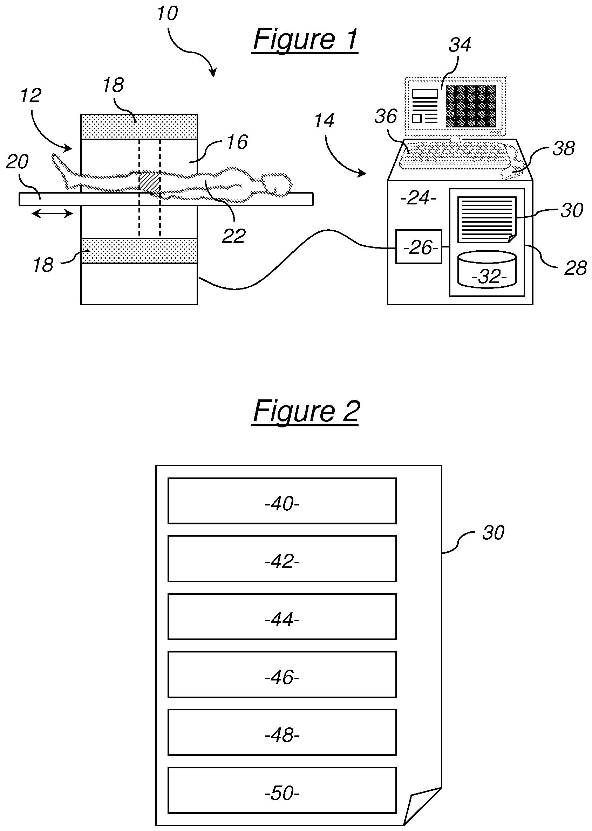

Le dispositif 10 d'acquisition et de segmentation d'images représenté schématiquement sur la figure 1 n'est qu'un exemple non limitatif de dispositif convenant pour une mise en œuvre d'un procédé de propagation automatique d'une segmentation d'images selon la présente invention. Il s'agit d'un dispositif d'imagerie par résonance magnétique (IRM) comportant un appareil d'acquisition 12 et un dispositif 14 de commande et de traitement, reliés l'un à l'autre en transmission de données.

L'appareil d'acquisition 12 comporte par exemple, de façon connue en soi, un tunnel 16 entouré d'un aimant cylindrique 18, dans lequel vient coulisser en translation commandée un lit 20 sur lequel est allongé un sujet d'observation 22, notamment un être humain ou animal, pour l'imagerie d'une partie de son corps, par exemple une cuisse.

Le dispositif 14 de commande et de traitement comporte un dispositif informatique 24 programmé pour la commande de l'appareil d'acquisition 12, c'est-à-dire pour la transmission de signaux de commande. Ce dispositif informatique 24 est en outre programmé pour le traitement de signaux de mesure retournés par l'appareil d'acquisition 12. Il présente une unité centrale de traitement 26, telle qu'un microprocesseur conçu pour émettre et recevoir respectivement les signaux de commande et de mesure, et une mémoire 28 dans laquelle est enregistré un programme d'ordinateur 30. La mémoire 28 comporte en outre une zone 32 de stockage de données traitées ou à traiter par l'unité de traitement 26 sur exécution du programme 30.

Le dispositif 14 de commande et de traitement comporte en outre des éléments d'interactivité avec un praticien tel qu'un expert de l'acquisition d'images IRM. Ces éléments incluent un écran d'affichage 34, un clavier 36 et un dispositif de pointage pour ordinateur tel qu'une souris 38.

Selon une technologie parfaitement connue et maîtrisée, l'appareil d'acquisition 12 est conçu pour engendrer un champ magnétique dans le tunnel 16 et pour en obtenir, sur commande du dispositif 14 piloté par le praticien, l'imagerie tridimensionnelle d'une portion volumique du corps humain ou animal exposé. Cette portion, par exemple une cuisse, est illustrée par la zone hachurée entre pointillés sur la figure 1. En paramétrant l'appareil d'acquisition 12 à l'aide du dispositif 14 de commande et de traitement, le praticien définit l'épaisseur globale du volume souhaité, un nombre de coupes souhaitées ou une distance souhaitée entre chaque coupe, l'épaisseur de chaque coupe et la résolution de chaque coupe. On obtient ainsi autant d'images parallèles que souhaité à partir d'une imagerie tridimensionnelle de tout un volume de portion de corps humain ou animal.

On se place donc ici dans le cas particulier d'une acquisition IRM d'une série, ordonnée longitudinalement, d'images bidimensionnelles transversales d'une cuisse ou d'un mollet du sujet d'observation 22. Une telle acquisition permet de visualiser le volume d'organes tels que des muscles ou des nerfs. Un objectif de l'invention est de pouvoir en fournir une segmentation précise pour accéder à des données quantitatives de volumes, de formes ou autres paramètres pertinents pour des applications médicales ou sportives par exemple. Le principe général suivi par un procédé selon l'invention appliqué au contexte de la figure 1 est de partir d'une segmentation initiale spatialement bidimensionnelle d'au moins une région d'intérêt réalisée dans une partie des images de la série ordonnée, pour propager automatiquement cette segmentation initiale bidimensionnelle aux autres images de la série acquise de manière à obtenir ainsi une segmentation finale spatialement tridimensionnelle.

En variante, une même coupe pourrait être acquise selon une série ordonnée d'instants successifs de manière à obtenir une imagerie volumique spatialement bidimensionnelle mais à dimension temporelle également. En variante également, une même coupe pourrait être acquise selon une série ordonnée de modes d'acquisition successifs de manière à obtenir une imagerie volumique spatialement bidimensionnelle mais à dimension modale également. Dans tous ces cas, le principe général suivi par un procédé selon l'invention appliqué au contexte de la figure 1 reste de partir d'une segmentation initiale spatialement bidimensionnelle d'au moins une région d'intérêt réalisée dans une partie des images de la série ordonnée, pour propager automatiquement cette segmentation initiale bidimensionnelle aux autres images de la série acquise de manière à obtenir ainsi une segmentation finale tridimensionnelle, la troisième dimension étant spatiale, temporelle ou modale.

De façon plus générale encore, le principe suivi par un procédé selon l'invention est de partir d'une segmentation initiale de dimension N, N≥2, d'au moins une région d'intérêt réalisée dans une partie des représentations d'images d'une série ordonnée dans une (N+1)-ième dimension, pour propager automatiquement cette segmentation initiale de dimension N aux autres représentations d'images de la série acquise de manière à obtenir ainsi une segmentation finale de dimension N+1, la (N+1)-ième dimension étant spatiale, temporelle ou modale.

Concrètement, lorsque l'acquisition est une acquisition mono- ou multi-modale d'images IRM, chaque représentation d'image inclut N=2, 3 ou 4 dimensions parmi :
- au moins deux de trois dimensions spatiales possibles,
- une dimension temporelle, et
- une dimension modale,
la série ordonnée étant acquise dans la (N+1)-ième dimension sélectionnée parmi :
- l'une des trois dimensions spatiales possibles,
- la dimension temporelle, et
- la dimension modale.

Le programme d'ordinateur 30 est détaillé séquentiellement sur la figure 2. Il comporte tout d'abord des instructions 40 pour acquérir une série ordonnée, dans le sens longitudinal précité, de n+1 images transversales (n≥2) notées I₀, ..., Iᵢ, ..., Iₙ d'une cuisse du sujet d'observation 22. Ces instructions comportent une sollicitation des éléments d'interactivité 34, 36, 38 pour que le praticien puisse définir lui-même certains paramètres d'acquisition. La série ordonnée acquise peut être conservée en mémoire 28 dans la zone de stockage 32.

Le programme d'ordinateur 30 comporte en outre des instructions 42 pour réaliser une segmentation initiale bidimensionnelle d'au moins une région d'intérêt dans les première et dernière images de la série ordonnée, pour l'obtention d'un premier masque de segmentation initiale de chaque région d'intérêt dans la première image de la série ordonnée et d'un dernier masque de segmentation initiale de chaque région d'intérêt dans la dernière image de la série ordonnée. De même, ces instructions comportent avantageusement une sollicitation des éléments d'interactivité 34, 36, 38 pour que le praticien puisse participer lui-même à la réalisation de cette segmentation initiale, par exemple conformément à l'enseignement de segmentation manuelle détaillé dans le document précité de Barnouin et al. En variante, la segmentation initiale peut être semi-automatique et supervisée ou automatique selon l'un quelconque des enseignements de l'art antérieur. Les masques de segmentations initiales ainsi obtenus peuvent être conservés en mémoire 28 dans la zone de stockage 32.

Le programme d'ordinateur 30 comporte en outre des instructions 44 pour estimer des paramètres de recalage entre les premier et dernier masques de segmentations initiales de chaque région d'intérêt tels qu'obtenus par exécution des instructions 42. Ces paramètres sont estimés automatiquement puis enregistrés sous forme de tableaux dont les coefficients indiquent pour chaque pixel du masque de segmentation initiale de l'image de départ, des valeurs de déplacement vers un pixel correspondant du masque de segmentation initiale de l'image cible. Ces tableaux sont appelés « champs de déplacements » et constituent des transformations issues du recalage souhaité. Considérant une région d'intérêt donnée ou un ensemble de régions d'intérêt données, un premier champ de déplacement comporte les coefficients de déplacement du premier masque de segmentation initiale de cette région d'intérêt ou de cet ensemble de régions d'intérêt dans la première image de la série ordonnée pour le recaler sur le dernier masque de segmentation initiale de cette même région d'intérêt ou de ce même ensemble dans la dernière image. Ce premier champ de déplacement peut être qualifié de champ de déplacement global ascendant et sera noté Lₐ par la suite. Considérant la même région d'intérêt donnée ou le même ensemble de régions d'intérêt données, un deuxième champ de déplacement comporte les coefficients de déplacement du dernier masque de segmentation initiale de cette région d'intérêt ou de cet ensemble dans la dernière image de la série ordonnée pour le recaler sur le premier masque de segmentation initiale de cette région d'intérêt ou de cet ensemble dans la première image. Ce deuxième champ de déplacement peut être qualifié de champ de déplacement global descendant et sera noté L_{d} par la suite. La technique de recalage ne sera pas détaillée parce qu'il en existe un grand nombre que l'homme du métier est apte à choisir en fonction de l'application visée. Dans le domaine de l'imagerie neuromusculaire IRM, il est avantageux d'utiliser des modèles basés sur des transformations non linéaires, par exemple un recalage par transformation difféomorphique symétrique tel qu'enseigné dans l'article de Avants et al, intitulé « Symmetric diffeomorphic image registration with cross-correlation: evaluating automated labeling of elderly and neurodegenerative brain », publié dans Medical Image Analysis, volume 12, n°1, pages 26-41, février 2008.

On notera que le champ de déplacement global ascendant Lₐ permet en fait de réaliser un changement de repère, en partant d'un premier repère lié au premier masque de segmentation initiale de la première image pour se placer dans un dernier repère lié au dernier masque de segmentation initiale de la dernière image. Inversement, le champ de déplacement global descendant L_{d} permet de réaliser un changement de repère, en partant du dernier repère lié au dernier masque de segmentation initiale de la dernière image pour se placer dans le premier repère lié au premier masque de segmentation initiale de la première image.

Le programme d'ordinateur 30 comporte en outre des instructions 46 pour propager automatiquement les segmentations initiales de chaque région d'intérêt à toutes les images de la série ordonnée par recalage de proche en proche. Ainsi, ces instructions sont définies pour que l'unité de traitement 26 puisse exécuter une propagation automatique ascendante de la segmentation initiale de chaque région d'intérêt, à partir de la première image, à toutes les autres images de la série ordonnée par recalage de proche en proche jusqu'à la dernière image. De même, elles sont en outre définies pour que l'unité de traitement 26 puisse exécuter une propagation automatique descendante de la segmentation initiale de chaque région d'intérêt, à partir de la dernière image, à toutes les autres images de la série ordonnée par recalage de proche en proche jusqu'à la première image. Comme précédemment, la technique de recalage ne sera pas détaillée parce qu'il en existe un grand nombre que l'homme du métier est apte à choisir en fonction de l'application visée. Il est ici de nouveau avantageux d'utiliser des modèles basés sur des transformations non linéaires, par exemple un recalage par transformation difféomorphique symétrique tel qu'enseigné dans l'article précité de Avants et al. Chaque transformation résultant d'un recalage souhaité est calculée entre deux images successives de la série ordonnée et produit un champ de déplacement local entre ces deux images. Une transformation permettant de réaliser un recalage entre deux images non successives peut ensuite être obtenue par composition des transformations successives estimées entre ces deux images pour produire un champ de déplacement spécifique entre ces deux images. En particulier, une transformation spécifique ascendante permettant de réaliser un recalage ascendant entre la première image de la série ordonnée et une autre image quelconque peut être obtenue par composition des transformations successives ascendantes estimées entre ces deux images, c'est-à-dire des champs de déplacements locaux ascendants successifs. De même, une transformation spécifique descendante permettant de réaliser un recalage descendant entre la dernière image de la série ordonnée et la même autre image quelconque peut être obtenue par composition des transformations successives descendantes estimées entre ces deux images, c'est-à-dire des champs de déplacements locaux descendants successifs. Ces deux transformations spécifiques peuvent être avantageusement combinées entre elles.

Le programme d'ordinateur 30 comporte donc des instructions 48 pour combiner entre elles les propagations automatiques ascendante et descendante telles qu'obtenues par exécution des instructions 46. En particulier, les instructions 48 sont définies pour combiner les deux transformations spécifiques ascendante et descendante définies ci-dessus pour chacune des images de la série ordonnée. Cette combinaison peut se faire grâce aux changements de repères rendus possibles par les calculs réalisés par exécution des instructions 44, c'est-à-dire par le champ de déplacement global ascendant Lₐ et par le champ de déplacement global descendant L_{d}. Il en résulte une amélioration possible des recalages ascendants par prise en compte des recalages descendants correspondants grâce au changement de repère réalisable à l'aide du champ de déplacement global ascendant Lₐ : on obtient ainsi des champs de déplacements spécifiques ascendants améliorés. Il en résulte également une amélioration possible des recalages descendants par prise en compte des recalages ascendants correspondants grâce au changement de repère réalisable à l'aide du champ de déplacement global descendant L_{d} : on obtient ainsi des champs de déplacements spécifiques descendants améliorés.

Cette combinaison des propagations automatiques ascendante et descendante est en outre avantageusement réalisée à l'aide de coefficients de pondération prédéterminés appliqués aux résultats des propagations ascendantes et descendantes, c'est-à-dire aux champs de déplacements ascendants et descendants correspondants. De préférence, ces coefficients décroissent de la première à la dernière image pour la propagation automatique ascendante et décroissent de la dernière à la première image pour la propagation automatique descendante. Ils tiennent ainsi avantageusement compte des dérives probables des propagations automatiques lorsqu'elles s'éloignent de leur image de référence.

Enfin, le programme d'ordinateur 30 comporte des instructions 50 pour combiner entre eux les champs de déplacements spécifiques ascendants et descendants améliorés tels que calculés par exécution des instructions 48, toujours grâce aux changements de repères rendus possibles par les calculs réalisés par exécution des instructions 44 et à l'aide des coefficients de pondération prédéterminés indiqués ci-dessus. Cette combinaison permet d'obtenir des champs de déplacements spécifiques ascendants ou descendants optimisés applicables au premier masque de segmentation initiale de la première image, ou au dernier masque de segmentation initiale de la dernière image, pour l'obtention de masques de segmentations sur toutes les images de la série ordonnées. Ces instructions sont bien sûr applicables à chaque région d'intérêt considérée ou à chaque ensemble de régions d'intérêt considérées.

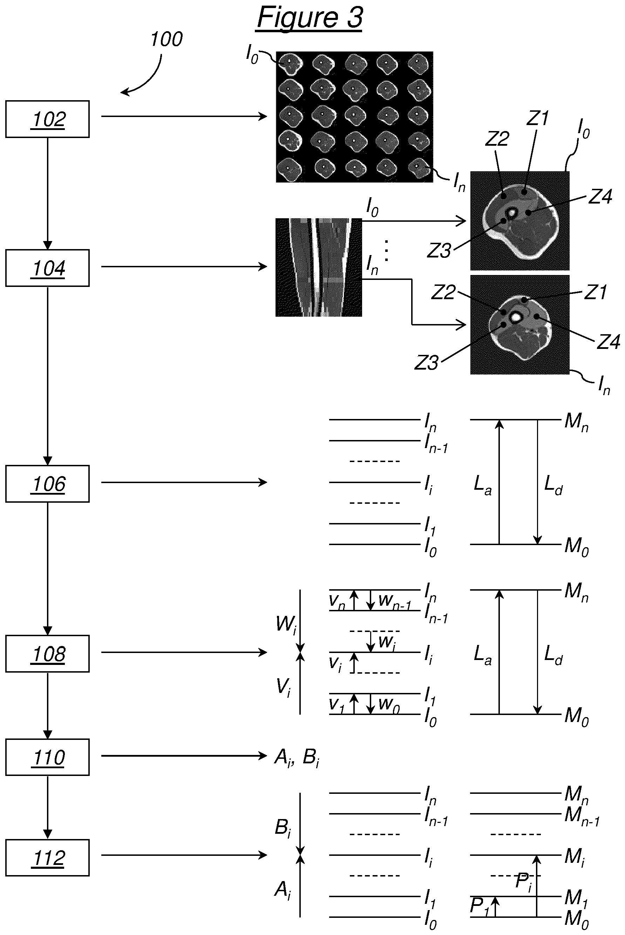

En référence à la figure 3, un procédé 100 de propagation automatique d'une segmentation d'images mis en œuvre par le dispositif 10 de la figure 1 grâce à l'exécution des instructions de la figure 2 va à présent être détaillé.

Au cours d'une première étape 102, réalisée conformément à l'exécution des instructions 40 par l'unité de traitement 26, les n+1 images ordonnées I₀, ..., Iᵢ, ..., Iₙ sont obtenues par commande de l'appareil d'acquisition 12. Elles sont enregistrées en zone de stockage 32.

Ensuite, au cours d'une étape 104, réalisée conformément à l'exécution des instructions 42 par l'unité de traitement 26, les première et dernière images I₀ et Iₙ sont initialement segmentées pour l'obtention d'un premier masque de segmentation initiale de chaque région d'intérêt dans la première image I₀ et d'un dernier masque de segmentation initiale de chaque région d'intérêt dans la dernière image Iₙ. Comme par exemple illustré sur la figure 3, quatre régions d'intérêt sont segmentées manuellement dans la première image I₀ par le praticien et labellisées Z1, Z2, Z3 et Z4, pour l'obtention de quatre premiers masques de segmentation initiale. Quatre régions d'intérêt correspondantes sont de même segmentées manuellement dans la dernière image Iₙ par le praticien et labellisées Z1, Z2, Z3 et Z4, pour l'obtention de quatre derniers masques de segmentation initiale.

Les étapes suivantes 106, 108, 110 et 112 peuvent être exécutées indépendamment pour chacune des régions d'intérêt Z1, Z2, Z3 et Z4, ou conjointement pour un ensemble quelconque de régions d'intérêt considérées. On notera donc Z l'une quelconque de ces régions d'intérêt ou l'un quelconque de ces ensembles de régions d'intérêt, M₀ le premier masque de segmentation initiale de cette région ou de cet ensemble d'intérêt Z dans la première image I₀ et Mₙ le dernier masque de segmentation initiale de cette région ou de cet ensemble d'intérêt Z dans la dernière image Iₙ.

Au cours de l'étape 106, réalisée conformément à l'exécution des instructions 44 par l'unité de traitement 26, les paramètres de recalage entre les masques de segmentation initiale M₀ et Mₙ sont estimés sous la forme des champs de déplacements globaux ascendants et descendants Lₐ et L_{d}. En notant Reg la transformation de recalage utilisée, cette étape revient, dans un mode de réalisation préféré, à exécuter les instructions suivantes : ${L}_{a} = Reg \left({M}_{0}, {M}_{n}\right)$ ${L}_{d} = Reg \left({M}_{n}, {M}_{0}\right)$

Au cours de l'étape 108, réalisée conformément à l'exécution des instructions 46 par l'unité de traitement 26, les segmentations initiales sont propagées de proche en proche par la même transformation de recalage Reg, mais cette fois-ci appliquée aux images. En notant vᵢ le champ de déplacement local ascendant estimé entre les images Iᵢ₋₁ et Iᵢ, wᵢ le champ de déplacement local descendant estimé entre les images Iᵢ₊₁ et Iᵢ, Vᵢ le champ de déplacement spécifique ascendant estimé entre les images I₁ et Iᵢ, Wᵢ le champ de déplacement spécifique descendant estimé entre les images Iₙ et Iᵢ , « ∘ » le symbole de la composition de fonctions appliquée aux champs de déplacements et Id le champ de déplacement nul recalant une image sur elle-même, cette étape revient, dans un mode de réalisation préféré, à exécuter les instructions suivantes : ${V}_{0} = {W}_{n} = Id$ *Pour i allant de 1 à n :* ${v}_{i} = Reg \left({I}_{i - 1}, {I}_{i}\right)$ ${V}_{i} = {v}_{i} ∘ {V}_{i - 1}$ ${w}_{n - i} = Reg \left({I}_{n + 1 - i}, {I}_{n - i}\right)$ ${W}_{n - i} = {w}_{n - i} ∘ {W}_{n + 1 - i}$

### Fin de boucle

Au cours de l'étape 110, réalisée conformément à l'exécution des instructions 48 par l'unité de traitement 26, les propagations automatiques ascendantes et descendantes obtenues précédemment, c'est-à-dire les champs de déplacement spécifiques ascendants et descendants Vᵢ et Wₙ₋ᵢ, pour i allant de 1 à n, sont améliorées par combinaisons entre elles via des changements de repères rendus possibles par les champs de déplacement globaux ascendants et descendants Lₐ et L_{d}. En notant Aᵢ le champ de déplacement spécifique ascendant amélioré calculé entre les images I₁ et Iᵢ, Bᵢ le champ de déplacement spécifique descendant amélioré calculé entre les images Iₙ et Iᵢ, αᵢ les coefficients de pondération ascendants et βᵢ les coefficients de pondération descendants, cette étape revient, dans un mode de réalisation préféré, à exécuter les instructions suivantes : ${A}_{0} = {B}_{n} = Id$ *Pour i allant de 1 à n :* ${A}_{i} = {α}_{i} \left({v}_{i}∘{A}_{i - 1}\right) + {β}_{i} \left({W}_{i}∘{L}_{a}\right)$ ${B}_{n - i} = {β}_{i} \left({w}_{n - i}∘{B}_{n + 1 - i}\right) + {α}_{n - i} \left({V}_{n - i}∘{L}_{d}\right)$

### Fin de boucle

Le choix des coefficients de pondération dépend de l'application envisagée. Un choix particulièrement adapté à la propagation d'une segmentation de région d'intérêt musculaire dans une série d'images IRM d'un membre inférieur ou supérieur d'un être humain ou animal observé est le suivant pour tout indice i compris entre 0 et n : ${α}_{i} = \left[{tan}^{- 1}\left(-i+n/2\right)\right] / π + 0,5$ ${β}_{i} = \left[{tan}^{- 1}\left(i-n/2\right)\right] / π + 0,5$

Enfin, au cours de l'étape 112, réalisée conformément à l'exécution des instructions 50 par l'unité de traitement 26, les champs de déplacements spécifiques ascendants et descendants améliorés tels que calculés par exécution des instructions 48 sont combinés entre eux pour obtenir des champs de déplacements spécifiques ascendants ou descendants optimisés. En notant Pᵢ le champ de déplacement spécifique ascendant optimisé calculé entre les images I₁ et Iᵢ, et Mᵢ le masque de segmentation résultant de la région d'intérêt Z dans l'image Iᵢ, cette étape revient, dans un mode de réalisation préféré, à exécuter les instructions suivantes :

### Pour i allant de 1 à n :

${P}_{i} = {α}_{i} {A}_{i} + {β}_{i} \left({B}_{i}∘{L}_{a}\right)$ ${M}_{i} = {P}_{i} \left({M}_{0}\right)$

### Fin de boucle

En variante et de manière similaire, en notant Qᵢ le champ de déplacement spécifique descendant optimisé calculé entre les images Iₙ et Iᵢ, l'étape 112 peut revenir, dans un mode de réalisation préféré, à exécuter les instructions suivantes :

### Pour i allant de 1 à n :

${Q}_{n - i} = {β}_{i} {B}_{n - i} + {α}_{n - i} \left({A}_{n - i}∘{L}_{d}\right)$ ${M}_{n - i} = {Q}_{n - i} \left({M}_{n}\right)$

### Fin de boucle

En procédant ainsi, on a pu propager à l'ensemble de la série ordonnée les masques de segmentation initiaux.

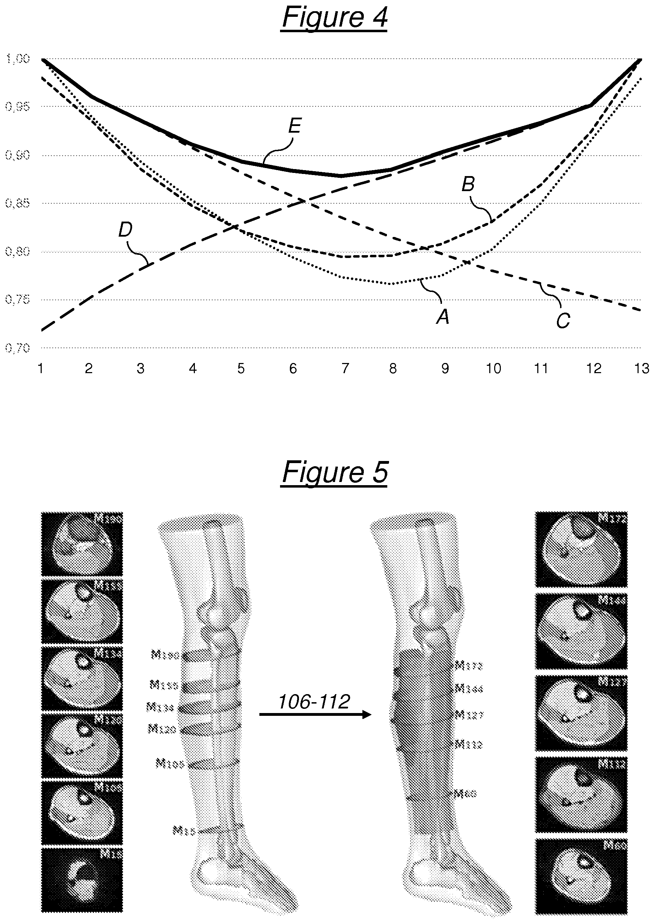

Des tests expérimentaux ont été menés sur des séries ordonnées d'images IRM musculaires de la cuisse d'un sujet d'observation et des résultats sont illustrés pour une série de treize images IRM sur la figure 4. Dans cette série, seules les première et dernière images ont été initialement segmentées manuellement pour une région d'intérêt. Les résultats de plusieurs propagations automatiques des segmentations manuelles sont comparés par calcul de leur coefficient de similarité DICE avec une segmentation entièrement manuelle de la série.

La courbe A en pointillés fins donne les coefficients de DICE pour une propagation de segmentation ascendante par interpolation linéaire réalisée à l'aide du champ de déplacement global Lₐ en partant de la segmentation manuelle de la première image : bien entendu, cette courbe converge aux extrémités de la série mais dérive rapidement et fortement entre les deux. La courbe B en traits interrompus courts donne les coefficients de DICE pour une propagation de segmentation descendante par interpolation linéaire réalisée à l'aide du champ de déplacement global L_{d} en partant de la segmentation manuelle de la dernière image : bien entendu, cette courbe converge également aux extrémités de la série mais dérive rapidement et fortement entre les deux. La courbe C en traits interrompus moyens donne les coefficients de DICE pour une propagation de segmentation ascendante à l'aide des champs de déplacement Vᵢ calculés à l'étape 108 en partant de la segmentation manuelle de la première image : cette courbe dérive nettement moins rapidement que la courbe A en début de série, mais continue à dériver tout au long de la série jusqu'à diverger fortement en fin de série. La courbe D en traits interrompus long donne les coefficients de DICE pour une propagation de segmentation descendante à l'aide des champs de déplacement Wᵢ calculés à l'étape 108 en partant de la segmentation manuelle de la dernière image : cette courbe dérive également nettement moins rapidement que la courbe B en fin de série, mais continue à dériver tout au long de la série jusqu'à diverger fortement en début de série. Enfin, la courbe E en trait continu donne les coefficients de DICE pour une propagation de segmentation réalisée selon le procédé 100 décrit précédemment. Cette courbe reste toujours au-dessus des quatre autres. Il convient même de noter qu'elle montre des résultats nettement meilleurs que chacun des meilleurs résultats des autres courbes en milieu de série.

La figure 5 illustre une généralisation du procédé de la figure 3. Selon cette généralisation, une série longue ordonnée de par exemple cent soixante-seize images IRM, notées I₁₅ à I₁₉₀, est acquise à l'étape 102 et subdivisée en une pluralité de séries ordonnées successives. Cinq séries ordonnées successives sont ainsi définies : une première série ordonnée des images I₁₅ à I₁₀₅, une deuxième série ordonnée des images I₁₀₅ à I₁₂₀, une troisième série ordonnée des images I₁₂₀ à I₁₃₄, une quatrième série ordonnée des images I₁₃₄ à I₁₅₅, une cinquième série ordonnée des images I₁₅₅ à I₁₉₀.

L'étape 104 est appliquée à chacune de ces cinq séries, de sorte qu'une segmentation initiale de régions d'intérêts est réalisée dans les images I₁₅, I₁₀₅, I₁₂₀, I₁₃₄, I₁₅₅ et I₁₉₀ pour la fourniture de masques de segmentations initiales M₁₅, M₁₀₅, M₁₂₀, M₁₃₄, M₁₅₅ et M₁₉₀, comme illustré en partie gauche de la figure 5.

Les étapes 106 à 112 sont également appliquées à chacune de ces cinq séries et pour chacune de leurs régions d'intérêt. Cela permet d'obtenir tous les autres masques de segmentation par propagation automatique selon les principes de la présente invention, par exemple les masques de segmentation M₆₀, M₁₁₂, M₁₂₇, M₁₄₄ et M₁₇₂ illustrés en partie droite de la figure 5.

Il apparaît clairement qu'un dispositif d'acquisition et de segmentation d'images tel que celui décrit précédemment permet d'obtenir de très bons résultats en segmentation par propagation de masques de segmentations initiales sur des données difficiles telles que des séries de représentations d'images IRM musculaires, avec des applications multiples en médecine et suivi sportif.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

En particulier, les instructions de programme d'ordinateur décrites précédemment ont été présentées comme incluses dans un unique programme d'ordinateur. Mais elles peuvent plus généralement être regroupées ou séparées selon toutes les combinaisons possibles en un ou plusieurs logiciels. Leur distinction est en outre purement fonctionnelle. Enfin, leurs fonctions pourraient aussi être au moins en partie micro programmées ou micro câblées dans des circuits intégrés dédiés. Ainsi, en variante, le dispositif informatique 24 mettant en œuvre l'unité de traitement 26 pourrait être remplacé par un dispositif électronique composé uniquement de circuits numériques (sans programme d'ordinateur) pour la réalisation des mêmes actions.

Par ailleurs, les principes de l'invention sont applicables à d'autres domaines d'imagerie que l'IRM.

## Revendications

1. Procédé (100) de propagation automatique dans une (N+1)-ième dimension d'une segmentation d'images initialisée en dimension N, N≥2, pour l'obtention d'une segmentation finale de dimension N+1 dans une série ordonnée (I₀, ..., Iᵢ, ..., Iₙ) de représentations d'images, comportant les étapes suivantes :
- acquisition (102) de la série ordonnée (I₀, ..., Iᵢ, ..., Iₙ), dans ladite (N+1)-ième dimension, de représentations d'images de dimension N,
- segmentation initiale (104) en dimension N d'une région d'intérêt (Z1, Z2, Z3, Z4) dans les première et dernière représentations d'images (I₀, Iₙ) de la série ordonnée, pour l'obtention respective de premier et dernier masques (M₀, Mₙ) de segmentations initiales de la région d'intérêt (Z1, Z2, Z3, Z4),
- estimation (106) :
• de paramètres (Lₐ) d'un recalage ascendant global du premier masque (M₀) sur le dernier masque (Mₙ) de segmentation initiale de la région d'intérêt (Z1, Z2, Z3, Z4), et
• de paramètres (L_{d}) d'un recalage descendant global du dernier masque (Mₙ) sur le premier masque (M₀) de segmentation initiale de la région d'intérêt (Z1, Z2, Z3, Z4),
- propagation automatique ascendante (108) de la segmentation initiale de la région d'intérêt (Z1, Z2, Z3, Z4), à partir de la première représentation d'image (I₀), à toutes les autres représentations d'images de la série ordonnée par recalage de proche en proche jusqu'à la dernière (Iₙ),
- propagation automatique descendante (108) de la segmentation initiale de la région d'intérêt (Z1, Z2, Z3, Z4), à partir de la dernière représentation d'image (Iₙ), à toutes les autres représentations d'images de la série ordonnée par recalage de proche en proche jusqu'à la première (I₀), et
- combinaison des propagations automatiques ascendante et descendante entre elles pour l'obtention de masques de segmentations (M₀, ..., Mᵢ, ..., Mₙ) sur toutes les représentations d'images de la série ordonnée (I₀, ..., Iᵢ, ..., Iₙ),
**caractérisé en ce que** les propagations automatiques ascendante et descendante (108) comportent le calcul de champs de déplacements spécifiques ascendants et descendants (Vᵢ, Wᵢ) entre, d'une part, respectivement les première et dernière représentations d'images (I₀, Iₙ), et, d'autre part, chacune des autres représentations d'images de la série ordonnée (I₀, ..., Iᵢ, ..., Iₙ), et **en ce que** la combinaison des propagations automatiques ascendante et descendante (108) entre elles est plus précisément réalisée à partir des champs de déplacements spécifiques ascendants et descendants (Vᵢ, Wᵢ) à l'aide d'un changement de repère, entre les première et dernière représentations d'images (I₀, Iₙ), obtenu :
- par application des paramètres (Lₐ) de recalage ascendant global estimés au champ de déplacement spécifique descendant (Wᵢ) calculé pour chaque représentation d'image (Iᵢ) de la série ordonnée autre que la première (I₀) et la dernière (Iₙ), pour une combinaison (110) avec le champ de déplacement spécifique ascendant (Vᵢ) également calculé pour chaque représentation d'image (Iᵢ) de la série ordonnée autre que la première (I₀) et la dernière (Iₙ), résultant en une amélioration des champs de déplacement spécifiques ascendants (Vᵢ), et
- par application des paramètres (L_{d}) de recalage descendant global estimés au champ de déplacement spécifique ascendant (Vᵢ) calculé pour chaque représentation d'image (Iᵢ) de la série ordonnée autre que la première (I₀) et la dernière (Iₙ), pour une combinaison (110) avec le champ de déplacement spécifique descendant (Wᵢ) également calculé pour chaque représentation d'image (Iᵢ) de la série ordonnée autre que la première (I₀) et la dernière (Iₙ), résultant en une amélioration des champs de déplacement spécifiques descendants (Wᵢ).

2. Procédé (100) de propagation automatique d'une segmentation d'images selon la revendication 1, dans lequel la combinaison (110, 112) des propagations automatiques ascendante et descendante (108) entre elles à l'aide dudit changement de repère est en outre réalisée à l'aide de coefficients de pondération prédéterminés appliqués aux résultats des propagations ascendantes et descendantes (108), ces coefficients incluant :
- des coefficients décroissant de la première à la dernière représentation d'image pour la propagation automatique ascendante, et
- des coefficients décroissant de la dernière à la première représentation d'image pour la propagation automatique descendante.

3. Procédé (100) de propagation automatique d'une segmentation d'images selon la revendication 1 ou 2, dans lequel :
- les recalages ascendant global et descendant global dont les paramètres (Lₐ, L_{d}) sont estimés (106) sont des recalages non linéaires, notamment des recalages difféomorphiques symétriques, et
- chaque recalage de proche en proche exécuté pour chaque propagation automatique ascendante ou descendante (108) est un recalage non linéaire, notamment un recalage difféomorphique symétrique, calculé entre deux représentations d'images successives de la série ordonnée (lo, ..., Iᵢ, ..., Iₙ).

4. Procédé (100) de propagation automatique d'une segmentation d'images selon l'une quelconque des revendications 1 à 3, dans lequel :
- la combinaison (110, 112) des propagations automatiques ascendante et descendante (108) entre elles comporte en outre une combinaison supplémentaire (112) des champs de déplacements spécifiques ascendants et descendants améliorés (Aᵢ, Bᵢ) à l'aide du changement de repère, entre les première et dernière représentations d'images (I₀, Iₙ), obtenu par application des paramètres (Lₐ, L_{d}) de recalage ascendant global ou descendant global, pour l'obtention de champs de déplacements ascendants ou descendants optimisés (Pᵢ), et
- on obtient (112) les masques de segmentations (M₀, ..., Mᵢ, ..., Mₙ) sur toutes les représentations d'images de la série ordonnée (I₀, ..., Iᵢ, ..., Iₙ) par application de ces champs de déplacements ascendants ou descendants optimisés (Pᵢ) au premier masque (M₀) de segmentation initiale de la première image (I₀) ou au dernier masque (Mₙ) de segmentation initiale de la dernière image (Iₙ).

5. Procédé (100) de propagation automatique d'une segmentation d'images selon l'une quelconque des revendications 1 à 4, dans lequel :
- la segmentation initiale (104) en dimension N est réalisée sur plusieurs régions d'intérêts (Z1, Z2, Z3, Z4) dans les première et dernière représentations d'images (I₀, Iₙ) de la série ordonnée (I₀, ..., Iᵢ, ..., Iₙ), pour l'obtention respective de premier et dernier masques de segmentations initiales de chaque région d'intérêt, et
- l'estimation des paramètres de recalage (106), les propagations automatiques ascendante et descendante (108) ainsi que leur combinaison entre elles (110, 112) sont réalisées pour chaque région d'intérêt initialement segmentée.

6. Procédé (100) de propagation automatique d'une segmentation d'images selon l'une quelconque des revendications 1 à 5, dans lequel :
- une série longue ordonnée, dans ladite (N+1)-ième dimension, de représentations d'images de dimension N est préalablement acquise (102) et subdivisée en une pluralité de séries ordonnées successives,
- la segmentation initiale (104) en dimension N de la région d'intérêt (Z1, Z2, Z3, Z4) est réalisée dans les première et dernière représentations d'images de chaque série ordonnée, sachant que la première représentation d'image de chaque série ordonnée à partir de la deuxième est aussi la dernière représentation d'image de la série ordonnée qui la précède, et
- l'estimation (106) des paramètres de recalage, les propagations automatiques ascendante et descendante (108) ainsi que leur combinaison entre elles (110, 112) sont réalisées pour chaque série ordonnée de la série longue ordonnée.

7. Procédé (100) de propagation automatique d'une segmentation d'images selon l'une quelconque des revendications 1 à 6, dans lequel l'acquisition (102) est une acquisition mono- ou multi-modale d'images IRM, chaque représentation d'image incluant N=2, 3 ou 4 dimensions parmi :
- au moins deux de trois dimensions spatiales possibles,
- une dimension temporelle, et
- une dimension modale,
la série ordonnée (I₀, ..., Iᵢ, ..., Iₙ) étant acquise dans la (N+1)-ième dimension sélectionnée parmi :
- l'une des trois dimensions spatiales possibles,
- la dimension temporelle, et
- la dimension modale.

8. Programme d'ordinateur (30) téléchargeable depuis un réseau de communication et/ou enregistré sur un support lisible par ordinateur et/ou exécutable par un processeur (26), **caractérisé en ce qu'**il comprend des instructions (40, 42, 44, 46, 48, 50) pour l'exécution des étapes d'un procédé (100) de propagation automatique d'une segmentation d'images selon l'une quelconque des revendications 1 à 7, lorsque ledit programme est exécuté sur un ordinateur.

9. Dispositif (10) d'acquisition et de segmentation d'images par propagation automatique dans une (N+1)-ième dimension d'une segmentation d'images initialisée en dimension N, N≥2, pour l'obtention d'une segmentation finale de dimension N+1 dans une série ordonnée (I₀, ..., Iᵢ, ..., Iₙ) de représentations d'images, comportant :
- des moyens (12, 26) d'acquisition d'une série ordonnée (I₀, ..., Iᵢ, ..., Iₙ), dans ladite (N+1)-ième dimension, de représentations d'images de dimension N,
- une mémoire (28) pour le stockage de premier et dernier masques (M₀, Mₙ) de segmentations initiales respectives en dimension N d'une région d'intérêt (Z1, Z2, Z3, Z4) dans les première et dernière représentations d'images (I₀, Iₙ) de la série ordonnée,
- un processeur (26) programmé pour :
• estimer (44) des paramètres (Lₐ) d'un recalage ascendant global du premier masque (M₀) sur le dernier masque (Mₙ) de segmentation initiale de la région d'intérêt (Z1, Z2, Z3, Z4),
• estimer (44) des paramètres (L_{d}) d'un recalage descendant global du dernier masque (Mₙ) sur le premier masque (M₀) de segmentation initiale de la région d'intérêt (Z1, Z2, Z3, Z4),
• propager automatiquement (46) de façon ascendante la segmentation initiale de la région d'intérêt (Z1, Z2, Z3, Z4), à partir de la première représentation d'image (I₀), à toutes les autres représentations d'images de la série ordonnée par recalage de proche en proche jusqu'à la dernière (Iₙ),
• propager automatiquement (46) de façon descendante la segmentation initiale de la région d'intérêt (Z1, Z2, Z3, Z4), à partir de la dernière représentation d'image (Iₙ), à toutes les autres représentations d'images de la série ordonnée par recalage de proche en proche jusqu'à la première (I₀), et
• combiner (48, 50) les propagations automatiques ascendante et descendante entre elles pour l'obtention de masques de segmentations (M₀, ..., Mᵢ, ..., Mₙ) sur toutes les représentations d'images de la série ordonnée (I₀, ..., Iᵢ, ..., Iₙ),
**caractérisé en ce que** le processeur (26) est plus précisément programmé pour calculer des champs de déplacements spécifiques ascendants et descendants (Vᵢ, Wᵢ) entre, d'une part, respectivement les première et dernière représentations d'images (I₀, Iₙ), et, d'autre part, chacune des autres représentations d'images de la série ordonnée (I₀, ..., Iᵢ, ..., Iₙ), et pour combiner (48, 50) les propagations automatiques ascendante et descendante entre elles à partir des champs de déplacements spécifiques ascendants et descendants (Vᵢ, Wᵢ) à l'aide d'un changement de repère, entre les première et dernière représentations d'images (I₀, Iₙ), obtenu :
- par application des paramètres (Lₐ) de recalage ascendant global estimés au champ de déplacement spécifique descendant (Wᵢ) calculé pour chaque représentation d'image (Iᵢ) de la série ordonnée autre que la première (I₀) et la dernière (Iₙ), pour une combinaison (110) avec le champ de déplacement spécifique ascendant (Vᵢ) également calculé pour chaque représentation d'image (Iᵢ) de la série ordonnée autre que la première (I₀) et la dernière (Iₙ), résultant en une amélioration des champs de déplacement spécifiques ascendants (Vᵢ), et
- par application des paramètres (L_{d}) de recalage descendant global estimés au champ de déplacement spécifique ascendant (Vᵢ) calculé pour chaque représentation d'image (Iᵢ) de la série ordonnée autre que la première (I₀) et la dernière (Iₙ), pour une combinaison (110) avec le champ de déplacement spécifique descendant (Wᵢ) également calculé pour chaque représentation d'image (Iᵢ) de la série ordonnée autre que la première (I₀) et la dernière (Iₙ), résultant en une amélioration des champs de déplacement spécifiques descendants (Wᵢ).

## Patentansprüche

1. Verfahren (100) zur automatischen Ausbreitung in einer (N+1)-ten Dimension einer Bildsegmentierung, die in der Dimension N, N≥2, eingeleitet wurde, um eine endgültige Segmentierung der Dimension N+1 in einer geordneten Reihe (I₀, ..., Iᵢ, ..., Iₙ) von Bilddarstellungen zu erhalten, umfassend die folgenden Schritte:
- ein Erwerben (102) der geordneten Reihe (I₀, ..., Iᵢ, ..., Iₙ) in der (N+1)-ten Dimension von Bilddarstellungen der Dimension N,
- ein einleitendes Segmentieren (104) in der Dimension N einer interessierenden Region (Z1, Z2, Z3, Z4) in den ersten und letzten Bilddarstellungen (I₀, Iₙ) der geordneten Reihe, um jeweils die erste und letzte Maske (M₀, Mₙ) der einleitenden Segmentierungen der interessierenden Region (Z1, Z2, Z3, Z4) zu erhalten,
- ein Schätzen (106):
• von Parametern (Lₐ) einer globalen aufsteigenden Registrierung der ersten Maske (M₀) auf die letzte Maske (Mₙ) der einleitenden Segmentierung der interessierenden Region (Z1, Z2, Z3, Z4), und
• von Parametern (L_{d}) einer globalen absteigenden Registrierung der letzten Maske (Mₙ) auf die erste Maske (M₀) der einleitenden Segmentierung der interessierenden Region (Z1, Z2, Z3, Z4),
- ein aufsteigendes automatisches Ausbreiten (108) der einleitenden Segmentierung der interessierenden Region (Z1, Z2, Z3, Z4), ausgehend von der ersten Bilddarstellung (I₀), zu allen anderen Bilddarstellungen der geordneten Reihe durch Registrierung der nächsten auf die nächste bis zur letzten (Iₙ),
- ein absteigendes automatisches Ausbreiten (108) der einleitenden Segmentierung der interessierenden Region (Z1, Z2, Z3, Z4), ausgehend von der letzten Bilddarstellung (Iₙ), zu allen anderen Bilddarstellungen der geordneten Reihe durch Registrierung der nächsten auf die nächste bis zur ersten (I₀), und
- ein Kombinieren des aufsteigenden und absteigenden automatischen Ausbreitens miteinander, um Segmentierungsmasken (M₀, ..., Mᵢ, ..., Mₙ) auf allen Bilddarstellungen der geordneten Reihe (I₀, ..., Iᵢ, ..., Iₙ) zu erhalten,
**dadurch gekennzeichnet, dass** die aufsteigenden und absteigenden automatischen Ausbreitungen (108) die Berechnung der aufsteigenden und absteigenden spezifischen Verschiebungsfelder (Vᵢ, Wᵢ) zwischen einerseits jeweils der ersten und letzten Bilddarstellung (I₀, Iₙ) und andererseits jeder der anderen Bilddarstellungen der geordneten Reihe (I₀, ..., Iᵢ, ..., Iₙ) umfassen, und dass die Kombination der aufsteigenden und absteigenden automatischen Ausbreitungen (108) miteinander insbesondere ausgehend von aufsteigenden und absteigenden spezifischen Verschiebungsfeldern (Vᵢ, Wᵢ) mithilfe eines Bezugssystemwechsels zwischen den ersten und letzten Bilddarstellungen (I₀, Iₙ) ausgeführt wird, die erhalten werden:
- durch Anwenden der geschätzten Parameter (Lₐ) der globalen aufsteigenden Registrierung auf das Feld der absteigenden spezifischen Verschiebung (Wᵢ), das für jede Bilddarstellung (Iᵢ) aus der geordneten Reihe außer der ersten (I₀) und der letzten (Iₙ) berechnet wird, für eine Kombination (110) mit dem Feld der aufsteigenden spezifischen Verschiebung (Vᵢ), das ebenfalls für jede Bilddarstellung (Iᵢ) aus der geordneten Reihe außer der ersten (I₀) und der letzten (Iₙ) berechnet wird, was eine Verbesserung der Felder der aufsteigenden spezifischen Verschiebung (Vᵢ) ergibt, und
- durch Anwenden der geschätzten Parameter (L_{d}) der globalen absteigenden Registrierung auf das Feld der aufsteigenden spezifischen Verschiebung (Vᵢ), das für jede Bilddarstellung (Iᵢ) aus der geordneten Reihe außer der ersten (I₀) und der letzten (Iₙ) berechnet wird, für eine Kombination (110) mit dem Feld der absteigenden spezifischen Verschiebung (Wᵢ), das ebenfalls für jede Bilddarstellung (Iᵢ) aus der geordneten Reihe außer der ersten (I₀) und der letzten (Iₙ) berechnet wird, was eine Verbesserung der Felder der absteigenden spezifischen Verschiebung (Wᵢ) ergibt.

2. Verfahren (100) zur automatischen Ausbreitung einer Bildsegmentierung nach Anspruch 1, wobei die Kombination (110, 112) der aufsteigenden und absteigenden automatischen Ausbreitungen (108) miteinander mithilfe des Bezugssystemwechsels ferner mithilfe von vorbestimmten Gewichtungskoeffizienten ausgeführt wird, die auf die Ergebnisse der aufsteigenden und absteigenden Ausbreitungen (108) angewendet werden, wobei diese Koeffizienten enthalten:
- Koeffizienten, die von der ersten bis zur letzten Bilddarstellung abnehmen, für die aufsteigende automatische Ausbreitung, und
- Koeffizienten, die von der letzten bis zur ersten Bilddarstellung abnehmen, für die absteigende automatische Ausbreitung.

3. Verfahren (100) zur automatischen Ausbreitung einer Bildsegmentierung nach Anspruch 1 oder 2, wobei:
- die aufsteigenden globalen und die absteigenden globalen Registrierungen, deren Parameter (Lₐ, L_{d}) geschätzt (106) werden, nicht-lineare Registrierungen, insbesondere symmetrische diffeomorphe Registrierungen sind, und
- jede Registrierung von nächster zu nächster, die für jede aufsteigende oder absteigende automatische Ausbreitung (108) ausgeführt wird, eine nicht-lineare Registrierung, insbesondere eine symmetrische diffeomorphe Registrierung ist, die zwischen zwei aufeinanderfolgenden Bilddarstellungen aus der geordneten Reihe (I₀, ..., Iᵢ ..., Iₙ) berechnet wird.

4. Verfahren (100) zur automatischen Ausbreitung einer Bildsegmentierung nach einem der Ansprüche 1 bis 3, wobei:
- die Kombination (110, 112) der aufsteigenden und absteigenden automatischen Ausbreitungen (108) miteinander ferner eine ergänzende Kombination (112) der mithilfe des Bezugssystemwechsels verbesserten aufsteigenden und absteigenden spezifischen Verschiebungsfelder (Aᵢ, Bi) zwischen den ersten und letzten Bilddarstellungen (I₀, Iₙ) umfasst, die durch Anwenden der Parameter (Lₐ, L_{d}) der aufsteigenden globalen oder der absteigenden globalen Registrierungen erhalten wird, um die aufsteigenden oder absteigenden optimierten Verschiebungsfelder (Pᵢ) zu erhalten, und
- die Segmentierungsmasken (M₀, ..., Mᵢ, ... Mₙ) auf allen Bilddarstellungen aus der geordneten Reihe (I₀, ..., Iᵢ, ..., Iₙ) durch Anlegen dieser aufsteigenden oder absteigenden optimierten Verschiebungsfelder (Pᵢ) auf die erste Maske (M₀) der einleitenden Segmentierung des ersten Bilds (I₀) oder auf die letzte Maske (Mₙ) der einleitenden Segmentierung des letzten Bilds (Iₙ) erhalten wird.

5. Verfahren (100) zum automatischen Ausbreiten einer Bildsegmentierung nach einem der Ansprüche 1 bis 4, wobei:
- die einleitende Segmentierung (104) in der Dimension N auf mehreren interessierenden Regionen (Z1, Z2, Z3, Z4) in den ersten und letzten Bilddarstellungen (I₀, Iₙ) der geordneten Reihe (I₀, ..., Iᵢ, ..., Iₙ) ausgeführt wird, um jeweils erste und zweite Masken der einleitenden Segmentierungen jeder interessierenden Region zu erhalten, und
- die Schätzung der Registrierungsparameter (106), die automatischen aufsteigenden und absteigenden Ausbreitungen (108) und ihre Kombination miteinander (110, 112) für jede einleitend segmentierte interessierende Region ausgeführt werden.

6. Verfahren (100) zum automatischen Ausbreiten einer Bildsegmentierung nach einem der Ansprüche 1 bis 5, wobei:
- eine lange geordneten Reihe in der (N+1)-ten Dimension von Bilddarstellungen der Dimension N vorab erworben (102) und in eine Vielzahl von aufeinanderfolgenden geordneten Reihen unterteilt wird,
- die einleitende Segmentierung (104) in der Dimension N der interessierenden Region (Z1, Z2, Z3, Z4) in den ersten und letzten Bilddarstellungen jeder geordneten Reihe in dem Wissen ausgeführt wird, dass die erste Bilddarstellung jeder geordneten Reihe ausgehend von der zweiten auch die letzte Bilddarstellung der ihr vorangehenden geordneten Reihe ist, und
- die Schätzung (106) der Registrierungsparameter, die aufsteigenden und absteigenden automatischen Ausbreitungen (108) und ihre Kombination miteinander (110, 112) für jede geordnete Reihe der langen geordneten Reihe ausgeführt werden.

7. Verfahren (100) zum automatischen Ausbreiten einer Bildsegmentierung nach einem der Ansprüche 1 bis 6, wobei das Erwerben (102) ein Erwerben von mono- oder multimodalen IRM-Bildern ist, wobei jede Bilddarstellung N=2, 3 oder 4 Dimensionen aus:
- mindestens zwei der drei möglichen räumlichen Dimensionen,
- einer zeitlichen Dimension, und
- einer modalen Dimension,
enthält,
wobei die geordnete Reihe (I₀, ..., Iᵢ, ... Iₙ) in der (N+1)-ten Dimension, ausgewählt aus:
- einer der drei möglichen räumlichen Dimensionen,
- der zeitlichen Dimension, und
- der modalen Dimension,
erworben wird.

8. Computerprogramm (30), das von einem Kommunikationsnetzwerk heruntergeladen und/oder auf einem computerlesbaren Träger gespeichert und/oder von einem Prozessor (26) ausgeführt werden kann, **dadurch gekennzeichnet, dass** es Anweisungen (40, 42, 44, 46, 48, 50) zur Ausführung der Schritte eines Verfahrens (100) zur automatischen Ausbreitung einer Bildsegmentierung nach einem der Ansprüche 1 bis 7 umfasst, wenn das Programm auf einem Computer ausgeführt wird.

9. Vorrichtung (10) zum Erwerben und Segmentieren von Bildern durch automatische Ausbreitung in einer (N+1)-en Dimension einer in Dimension N, N>2, eingeleiteten Bildsegmentierung, um eine endgültige Segmentierung der Dimension N+1 in einer geordneten Reihe (I₀, ..., Iᵢ, ..., Iₙ) von Bilddarstellungen zu erhalten, umfassend:
- Mittel (12, 26) zum Erwerben einer geordneten Reihe (I₀, ..., Iᵢ, ..., Iₙ) in der (N+1)-ten Dimension von Bilddarstellungen der Dimension N,
- einen Speicher (28) zum Speichern der ersten und letzten Maske (M₀, Mₙ) der jeweiligen einleitenden Segmentierungen in der Dimension N einer interessierenden Region (Z1, Z2, Z3, Z4) in den ersten und letzten Bilddarstellungen (I₀, Iₙ) der geordneten Reihe,
- einen Prozessor (26), der programmiert ist zum:
• Schätzen (44) von Parametern (Lₐ) einer aufsteigenden globalen Registrierung der ersten Maske (M₀) auf die letzte Maske (Mₙ) der einleitenden Segmentierung der interessierenden Region (Z1, Z2, Z3, Z4), und
▪ Schätzen (44) von Parametern (L_{d}) einer absteigenden globalen Registrierung der letzten Maske (Mₙ) auf die erste Maske (M₀) der einleitenden Segmentierung der interessierenden Region (Z1, Z2, Z3, Z4),
• automatischen Ausbreiten (46) auf aufsteigende Weise der einleitenden Segmentierung der interessierenden Region (Z1, Z2, Z3, Z4), ausgehend von der ersten Bilddarstellung (I₀), zu allen anderen Bilddarstellungen der geordneten Reihe durch Registrierung der nächsten auf die nächste bis zur letzten (Iₙ),
• automatischen Ausbreiten (46) auf absteigende Weise der einleitenden Segmentierung der interessierenden Region (Z1, Z2, Z3, Z4), ausgehend von der letzten Bilddarstellung (Iₙ), zu allen anderen Bilddarstellungen der geordneten Reihe durch Registrierung der nächsten auf die nächste bis zur ersten (I₀), und
• Kombinieren (48, 50) der aufsteigenden und absteigenden automatischen Ausbreitungen miteinander, um Segmentierungsmasken (M₀, ..., Mᵢ, ..., Mₙ) auf allen Bilddarstellungen der geordneten Reihe (I₀, ..., Iᵢ, ..., Iₙ) zu erhalten,
**dadurch gekennzeichnet, dass** der Prozessor (26) insbesondere programmiert ist, um die aufsteigenden und absteigenden spezifischen Verschiebungsfelder (Vᵢ, Wᵢ) zwischen einerseits jeweils der ersten und letzten Bilddarstellung (I₀, Iₙ) und andererseits jeder der anderen Bilddarstellungen der geordneten Reihe (I₀, ..., Iᵢ, ..., Iₙ) zu berechnen, und die aufsteigenden und absteigenden automatischen Ausbreitungen ausgehend von aufsteigenden und absteigenden spezifischen Verschiebungsfeldern (Vᵢ, Wᵢ) mithilfe eines Bezugssystemwechsels zwischen den ersten und letzten Bilddarstellungen (I₀, Iₙ) miteinander zu kombinieren (48, 50), die erhalten werden:
- durch Anwenden der geschätzten Parameter (Lₐ) der aufsteigenden globalen Registrierung auf das Feld der absteigenden spezifischen Verschiebung (Wᵢ), das für jede Bilddarstellung (Iᵢ) aus der geordneten Reihe außer der ersten (I₀) und der letzten (Iₙ) berechnet wird, für eine Kombination (110) mit dem Feld der aufsteigenden spezifischen Verschiebung (Vᵢ), das ebenfalls für jede Bilddarstellung (Iᵢ) aus der geordneten Reihe außer der ersten (I₀) und der letzten (Iₙ) berechnet wird, was eine Verbesserung der Felder der spezifischen aufsteigenden Verschiebung (Vᵢ) ergibt, und
- durch Anwenden der geschätzten Parameter (L_{d}) der absteigenden globalen Registrierung auf das Feld der aufsteigenden spezifischen Verschiebung (Vᵢ), das für jede Bilddarstellung (Iᵢ) aus der geordneten Reihe außer der ersten (I₀) und der letzten (Iₙ) berechnet wird, für eine Kombination (110) mit dem Feld der absteigenden spezifischen Verschiebung (Wᵢ), das ebenfalls für jede Bilddarstellung (Iᵢ) aus der geordneten Reihe außer der ersten (I₀) und der letzten (Iₙ) berechnet wird, was eine Verbesserung der Felder der absteigenden spezifischen Verschiebung (Wᵢ) ergibt.

## Claims

1. A method (100) for automatic propagation into an (N+1)-th dimension of an image segmentation initialized in dimension N, N≥2, to obtain a final segmentation of dimension N+1 in an ordered series (I₀, ..., li, ..., Iₙ) of image representations, comprising the following steps:
- acquisition (102) of the ordered series (I₀, ..., li, ..., Iₙ), in said (N+1)-th dimension, of image representations of dimension N,
- initial segmentation (104) in dimension N of a region of interest (Z1, Z2, Z3, Z4) in the first and last image representations (I₀, Iₙ) of the ordered series, to respectively obtain first and last initial segmentation masks (M₀, Mₙ) of the region of interest (Z1, Z2, Z3, Z4),
- estimation (106):
• of parameters (Lₐ) of an overall upward registration of the first mask (M₀) on the last mask (Mₙ) of initial segmentation of the region of interest (Z1, Z2, Z3, Z4), and
• of parameters (L_{d}) of an overall downward registration of the last mask (Mₙ) on the first mask (M₀) of initial segmentation of the region of interest (Z1, Z2, Z3, Z4),
- upward automatic propagation (108) of the initial segmentation of the region of interest (Z1, Z2, Z3, Z4), from the first image representation (I₀), to all the other image representations of the ordered series by step-by-step registration up to the last (Iₙ),
- downward automatic propagation (108) of the initial segmentation of the region of interest (Z1, Z2, Z3, Z4), from the last image representation (Iₙ), to all the other image representations of the ordered series by step-by-step registration up to the first (I₀), and
- combination of the upward and downward automatic propagations with one another to obtain segmentation masks (M₀, ..., Mᵢ, ..., Mₙ) on all the image representations of the ordered series (I₀, ..., li, ..., Iₙ),
**characterized in that** the upward and downward automatic propagations (108) comprise the calculation of upward and downward specific displacement fields (Vᵢ, Wᵢ) between, on the one hand, respectively the first and last image representations (I₀, Iₙ), and, on the other hand, each of the other image representations of the ordered series (I₀, ..., li, ..., Iₙ), and **in that** the combination of the upward and downward automatic propagations (108) with one another is more specifically carried out from the upward and downward specific displacement fields (Vᵢ, Wᵢ) using a reference frame change, between the first and last image representations (I₀, Iₙ), obtained:
- by applying the estimated overall upward registration parameters (Lₐ) to the downward specific displacement field (Wᵢ) calculated for each image representation (Iᵢ) of the ordered series other than the first one (I₀) and the last one (Iₙ), for a combination (110) with the upward specific displacement field (Vᵢ) also calculated for each image representation (Iᵢ) of the ordered series other than the first one (I₀) and the last one (Iₙ), resulting in an enhancement of the upward specific displacement fields (Vᵢ), and
- by applying the estimated overall downward registration parameters (L_{d}) to the upward specific displacement field (Vᵢ) calculated for each image representation (Iᵢ) of the ordered series other than the first one (I₀) and the last one (Iₙ), for a combination (110) with the downward specific displacement field (Wᵢ) also calculated for each image representation (Iᵢ) of the ordered series other than the first one (I₀) and the last one (Iₙ), resulting in an enhancement of the downward specific displacement fields (Wᵢ).

2. The method (100) for automatic propagation of an image segmentation according to claim 1, wherein the combination (110, 112) of the upward and downward automatic propagations (108) with one another using said reference frame change is further carried out using predetermined weighting coefficients applied to the results of the upward and downward propagations (108), these coefficients including:
- decreasing coefficients from the first to the last image representation for the upward automatic propagation, and
- decreasing coefficients from the last to the first image representation for the downward automatic propagation.

3. The method (100) of automatic propagation of an image segmentation according to claim 1 or 2, wherein:
- the overall upward and overall downward registrations the parameters (Lₐ, L_{d}) of which are estimated (106) are non-linear registrations, particularly symmetric diffeomorphic registrations, and
- each step-by-step registration executed for each upward or downward automatic propagation (108) is a non-linear registration, particularly a symmetric diffeomorphic registration, calculated between two successive image representations of the ordered series (I₀, ..., li, ..., Iₙ).

4. The method (100) for automatic propagation of an image segmentation according to any one of claims 1 to 3, wherein:
- the combination (110, 112) of the upward and downward automatic propagations (108) with one another further comprises an additional combination (112) of the enhanced upward and downward specific displacement fields (Aᵢ, Bᵢ) using the reference frame change, between the first and last image representations (I₀, Iₙ), obtained by applying the overall upward or overall downward registration parameters (Lₐ, L_{d}), to obtain optimized upward or downward displacement fields (Pᵢ), and
- the segmentation masks (M₀, ..., Mᵢ, ..., Mₙ) are obtained (112) on all the image representations of the ordered series (I₀, ..., li, ..., Iₙ) by applying these optimized upward or downward displacement fields (Pᵢ) to the first initial segmentation mask (M₀) of the first image (I₀) or to the last initial segmentation mask (Mₙ) of the last image (Iₙ).

5. The method (100) for automatic propagation of an image segmentation according to any one of claims 1 to 4, wherein:
- the initial segmentation (104) in dimension N is carried out on a plurality of regions of interest (Z1, Z2, Z3, Z4) in the first and last image representations (I₀, Iₙ) of the ordered series (I₀, ..., li, ..., Iₙ), to respectively obtain first and last initial segmentation masks of each region of interest, and
- the estimation of the registration parameters (106), the upward and downward automatic propagations (108) as well as the combination thereof with one another (110, 112) are carried out for each initially segmented region of interest.

6. The method (100) for automatic propagation of an image segmentation according to any one of claims 1 to 5, wherein:
- a long ordered series, in said (N+1)-th dimension, of image representations of dimension N is previously acquired (102) and subdivided into a plurality of successive ordered series,
- the initial segmentation (104) in dimension N of the region of interest (Z1, Z2, Z3, Z4) is carried out in the first and last image representations of each ordered series, knowing that the first image representation of each ordered series from the second is also the last image representation of the preceding ordered series, and
- the estimation (106) of the registration parameters, the upward and downward automatic propagations (108) as well as the combination thereof with one another (110, 112) are carried out for each ordered series of the long ordered series.

7. The method (100) for automatic propagation of an image segmentation according to any one of claims 1 to 6, wherein the acquisition (102) is a mono- or multimodal MRI image acquisition, each image representation including N=2, 3 or 4 dimensions among:
- at least two of three possible spatial dimensions,
- a temporal dimension, and
- a modal dimension,
the ordered series (I₀, ..., Iᵢ, ..., Iₙ) being acquired in the (N+1)-th dimension selected among:
- one of the three possible spatial dimensions,
- the temporal dimension, and
- the modal dimension.

8. A computer program (30) downloadable from a communication network and/or recorded on a computer-readable medium and/or executable by a processor (26), **characterized in that** it comprises instructions (40, 42, 44, 46, 48, 50) for executing the steps of a method (100) of automatic propagation of an image segmentation according to any one of claims 1 to 7, when said program is executed on a computer.

9. A device (10) for acquiring and segmenting images by automatic propagation into an (N+1)-th dimension of an image segmentation initialized in dimension N, N≥2, to obtain a final segmentation of dimension N+1 in an ordered series (I₀, ..., Iᵢ, ..., Iₙ) of image representations, comprising:
- means (12, 26) for acquisition of an ordered series (I₀, ..., Iᵢ, ..., Iₙ), in said (N+1)-th dimension, of image representations of dimension N,
- a memory (28) for storing first and last respective initial segmentation masks (M₀, Mₙ) in dimension N of a region of interest (Z1, Z2, Z3, Z4) in the first and last image representations (I₀, Iₙ) of the ordered series,
- a processor (26) programmed to:
• estimate (44) parameters (Lₐ) of an overall upward registration of the first mask (M₀) on the last mask (Mₙ) of initial segmentation of the region of interest (Z1, Z2, Z3, Z4),
• estimate (44) parameters (L_{d}) of an overall downward registration of the last mask (Mₙ) on the first mask (M₀) of initial segmentation of the region of interest (Z1, Z2, Z3, Z4),
• upwardly automatically propagate (46) the initial segmentation of the region of interest (Z1, Z2, Z3, Z4), from the first image representation (I₀), to all the other image representations of the ordered series by step-by-step registration up to the last (Iₙ),
• downwardly automatically propagate (46) the initial segmentation of the region of interest (Z1, Z2, Z3, Z4), from the last image representation (Iₙ), to all the other image representations of the ordered series by step-by-step registration up to the first (I₀), and
• combine (48, 50) the upward and downward automatic propagations with one another to obtain segmentation masks (M₀, ..., Mᵢ, ..., Mₙ) on all the image representations of the ordered series (I₀, ..., Iᵢ, ..., Iₙ),
**characterized in that** the processor (26) is more specifically programmed to calculate upward and downward specific displacement fields (Vᵢ, Wᵢ) between, on the one hand, respectively the first and last image representations (I₀, Iₙ), and, on the other hand, each of the other image representations of the ordered series (I₀, ..., Iᵢ, ..., Iₙ), and to combine (48, 50) the upward and downward automatic propagations with one another from the upward and downward specific displacement fields (Vᵢ, Wᵢ) using a reference frame change, between the first and last image representations (I₀, Iₙ), obtained:
- by applying the estimated overall upward registration parameters (Lₐ) to the downward specific displacement field (Wᵢ) calculated for each image representation (Iᵢ) of the ordered series other than the first one (I₀) and the last one (Iₙ), for a combination (110) with the upward specific displacement field (Vᵢ) also calculated for each image representation (Iᵢ) of the ordered series other than the first one (I₀) and the last one (Iₙ), resulting in an enhancement of the upward specific displacement fields (Vᵢ), and
- by applying the estimated overall downward registration parameters (L_{d}) to the upward specific displacement field (Vᵢ) calculated for each image representation (Iᵢ) of the ordered series other than the first one (I₀) and the last one (Iₙ), for a combination (110) with the downward specific displacement field (Wᵢ) also calculated for each image representation (Iᵢ) of the ordered series other than the first one (I₀) and the last one (Iₙ), resulting in an enhancement of the downward specific displacement fields (Wᵢ).
